# EUROPÄISCHE PATENTSCHRIFT

(11) **EP 3 976 985 B1**
(45) Veröffentlichungstag und Bekanntmachung des Hinweises auf die Patenterteilung: **08.03.2023**
(21) Anmeldenummer: 20727912.6
(22) Anmeldetag: 12.05.2020
(51) Int. Cl.: F16D 11/14

(54) **FORMSCHLUSSKUPPLUNG UND VERFAHREN ZUM KOPPELN EINER MOTORWELLE MIT EINER GETRIEBEEINGANGSWELLE UND/ODER MIT EINER ZWISCHENWELLE**
POSITIVE COUPLING AND METHOD FOR COUPLING A MOTOR SHAFT TO A TRANSMISSION INPUT SHAFT AND/OR TO AN INTERMEDIATE SHAFT
ACCOUPLEMENT POSITIF ET PROCÉDÉ D'ACCOUPLEMENT D'UN ARBRE DE MOTEUR A UN ARBRE D'ENTREE DE TRANSMISSION ET/OU A UN ARBRE INTERMÉDIAIRE

(30) Priorität: 27.05.2019 DE 102019114200
(43) Veröffentlichungstag der Anmeldung: 06.04.2022
(73) Patentinhaber: Schaeffler Technologies AG & Co. KG, 91074 Herzogenaurach (DE)
(72) Erfinder: FINKENZELLER, Marc, 77723 Gengenbach (DE); TREFFEISEN, Florian, 76185 Karlsruhe (DE)
(86) Internationale Anmeldenummer: PCT/DE2020/100399
(87) Internationale Veröffentlichungsnummer: WO 2020/239170

(56) Entgegenhaltungen:
- CN-U- 202 493 333
- GB-A- 191 316 521
- US-A- 4 226 316
- US-A1- 2003 054 889

## Beschreibung

Die Erfindung betrifft eine Formschlusskupplung und ein Verfahren, mit deren Hilfe eine Motorwelle einer Brennkraftmaschine mit einer Getriebeeingangswelle eines Kraftfahrzeuggetriebes und/oder mit einer Zwischenwelle eines Hybrid-Antriebsstrangs gekoppelt werden kann, um ein Drehmoment in einem Antriebsstrang eines Kraftfahrzeugs zu übertragen.

Beispielsweise aus WO 2008/092426 A2 ist ein Hybrid-Antriebsstrang für ein HybridFahrzeug bekannt, bei dem eine Motorwelle einer Brennkraftmaschine über ein zwischengeschaltetes Zweimassenschwungrad mit Hilfe einer als Lamellenkupplung ausgestalteten Reibungskupplung mit einer Zwischenwelle gekoppelt werden kann, an der ein Rotor einer elektrischen Maschine angebunden ist. Die Zwischenwelle kann über eine Steckverzahnung mit einer Getriebeeingangswelle eines Kraftfahrzeuggetriebes gekoppelt sein.

Ferner ist aus der CN 202 493 333 U eine Formschlusskupplung zur wahlweisen formschlüssigen Drehmomentübertragung in einem Antriebsstrang eines Kraftfahrzeugs gemäß dem Oberbegriff des Anspruchs 1, sowie ein Verfahren zum mittelbaren Koppeln einer Motorwelle einer Brennkraftmaschine mit einer Getriebeeingangswelle eines Kraftfahrzeuggetriebes gemäß dem Oberbegriff des Anspruchs 8 bekannt.

Es besteht ein ständiges Bedürfnis möglichst große Drehmomente in einem Antriebsstrang eines Kraftfahrzeugs übertragen zu können.

Es ist die Aufgabe der Erfindung Maßnahmen aufzuzeigen, die eine gute Übertragung hoher Drehmomente in einem Antriebsstrang ermöglichen.

Die Lösung der Aufgabe erfolgt erfindungsgemäß durch eine Formschlusskupplung mit den Merkmalen des Anspruchs 1 sowie ein Verfahren mit den Merkmalen des Anspruchs 8. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft eine Formschlusskupplung zur wahlweisen formschlüssigen Drehmomentübertragung in einem Antriebsstrang eines Kraftfahrzeugs, mit einem mit der Motorwelle direkt oder indirekt koppelbaren Eingangselement zum Einleiten eines Drehmoments, einem relativ zu dem Eingangselement drehbaren Ausgangselement zum Ausleiten des Drehmoments, mehreren axial verlagerbaren Kugeln zum formschlüssigen Koppeln des Ausgangselements mit dem Eingangselement, einem Betätigungselement zum axialen Verlagern der Kugeln zwischen einer in einer Axialverzahnung eingesetzten Schließstellung und einer zu der Axialverzahnung axial versetzten Öffnungsstellung, wobei die Kugeln zwischen der Schließstellung und der Öffnungsstellung in einer Radialverzahnung eingesetzt sind, wobei das Betätigungselement eine, insbesondere als in Umfangsrichtung umlaufende Rille ausgestaltete, Aufnahmevertiefung zur teilweisen Aufnahme der jeweiligen Kugel aufweist, und einer mit dem Betätigungselement befestigten Federeinrichtung zur axialen Vorspannung jeder Kugel innerhalb der Aufnahmevertiefung auf die Axialverzahnung zu.

Wenn ein Drehmomentfluss zwischen der Brennkraftmaschine und dem übrigen Antriebsstrang des Kraftfahrzeugs hergestellt werden soll, befindet sich die Brennkraftmaschine in der Regel auf einem eher niedrigen Leistungsniveau, auf dem ein eher geringes Drehmoment erzeugt wird, das unterhalb des noch übertragbaren Grenzdrehmoments einer zur Formschlusskupplung parallel geschalteten Reibungskupplung liegt. Zum Ankoppeln der Brennkraftmaschine kann somit zunächst die Reibungskupplung geschlossen werden, wodurch in einem Schlupfbetrieb der Reibungskupplung eine Drehzahlsynchronisation des Ausgangselements mit dem Eingangselement erfolgt. Zum Ende der Drehzahlsynchronisation hin oder nach der Drehzahlsynchronisation kann ein Schließen der Formschlusskupplung begonnen werden, indem das Betätigungselement versucht die Kugeln in die Zahnzwischenräume der Axialverzahnung zu drücken. Wenn nun die Leistungsabgabe der Brennkraftmaschine erhöht wird und das Drehmoment immer größer wird, kann das an dem Kupplungsaggregat angreifende Drehmoment das Grenzdrehmoment der Reibungskupplung ohne Probleme übersteigen. Der Drehmomentfluss kann hierbei zumindest teilweise über die Formschlusskupplung erfolgen, welche die Reibungskupplung überbrückt. Aufgrund des Formschlusses der Kugeln in der Axialverzahnung und in der Radialverzahnung können auch extrem hohe Drehmomente in der Formschlusskupplung übertragen werden. Falls nach der über die Reibungskupplung erreichten Drehzahlsynchronisation die Kugeln zufälligerweise auf den Zahnköpfender Zähne der Axialverzahnung aufliegen und nicht in die Zahnzwischenräume der Axialverzahnung gelangen, kann die Formschlusskupplung automatisch in die Schließstellung gelangen, wenn in der Reibungskupplung das Grenzdrehmoment überschritten wird und eine Relativdrehung der Ausgangsseite zur Eingangsseite beginnt. Die Relativdrehung erfolgt jedoch bei einer sehr geringen Drehzahldifferenz, so dass die Formschlusskupplung nach einer Relativdrehung um wenige Winkelgrade in Umfangsrichtung ohne Probleme in die formschlüssig geschlossene Schließstellung gelangen kann, ohne dass unzulässig starke Tangentialkräfte zwischen den Kugeln und der Axialverzahnung auftreten.

Damit das Betätigungselement die Kugeln axial verlagern kann, sind die Kugeln teilweise in der Aufnahmevertiefung eingesetzt. Die Aufnahmevertiefung kann insbesondere in der Art einer Rille eine Rillenkugellagers ausgestaltet sein. Das Betätigungselement kann beispielsweise ein ursprünglich für ein Rillenkugellager vorgesehener Lagerring sein, der gegebenenfalls geringfügig für seine Funktion als Betätigungselement zur axialen Verlagerung der Kugeln kostengünstig angepasst sein kann. Innerhalb der Aufnahmevertiefung könne die Kugeln in einem gemeinsamen Radiusbereich mit dem Betätigungselement liegen, so dass das Betätigungselement eine in axialer Richtung gerichtete Betätigungskraft auf die Kugeln aufprägen kann. Damit die Kugel leichtgängig axial verlagert werden kann, sind die Kugeln insbesondere mit Spiel in der Aufnahmevertiefung eingesetzt, so dass die Kugeln leicht abrollen und/oder abgleiten können. Aufgrund des axialen Spiels in der Aufnahmevertiefung und aufgrund von Fertigungstoleranzen kann jedoch die axiale Relativlage der Kugeln etwas variieren, wodurch es grundsätzlich möglich wäre, dass die Kugeln in unterschiedlichen axialen Relativlagen in der Schließstellung in der Axialverzahnung eingesetzt sind, wodurch die Kugeln nicht gleichmäßig tragen und durch die unterschiedliche Belastung Belastungsspitzen in einzelnen Kugeln auftreten könnten, die zu Beschädigungen und/oder vorzeitigem Verschleiß führen können. Durch die Federeinrichtung wird jedoch nicht das Betätigungselement mit den Kugeln als Ganzes, sondern jede einzelne Kugel relativ zum Betätigungselement in axialer Richtung auf die Axialverzahnung zu mit einer Federkraft vorgespannt. Ein axiales Spiel der Kugeln in der Aufnahmevertiefung kann dadurch eliminiert werden. Zudem können die Kugeln sehr genau in einer identischen axialen Relativlage zum Betätigungselement gehalten werden. Dadurch kann ein gleichzeitiger und gleichartiger Kontakt der Kugeln mit der Axialverzahnung während der Schließbewegung der Formschlusskupplung in die Schließstellung erreicht werden. Die Federeinrichtung kann dadurch sicherstellen, dass die Kugeln in der Schließstellung im Wesentlichen gleich belastet werden und gleich tragen, so dass Belastungsspitzen in den Kugeln vermieden sind. Die Kugeln können auch extrem hohe Drehmomente übertragen, ohne dass eine Beschädigung und/oder ein vorzeitiger Verschleiß der bei der formschlüssigen Drehmomentübertragung beteiligen Bauteile zu befürchten ist. Durch die an allen Kugeln einzeln angreifende Federeinrichtung kann ein gleichmäßiges Tragen der Kugeln in der Schließstellung der Formschlusskupplung sichergestellt werden, so dass eine gute Übertragung hoher Drehmomente in einem Antriebsstrang ermöglicht ist.

Das Eingangselement kann die Axialverzahnung aufweisen, während das Ausgangselement die Radialverzahnung aufweist, oder umgekehrt. Die Radialverzahnung ist insbesondere als Außenverzahnung ausgeführt. Das Betätigungselement ist insbesondere als Außenring ausgestaltet, der radial außerhalb zu der als Außenverzahnung ausgeführten Radialverzahnung angeordnet ist. Das Betätigungselement kann insbesondere zumindest teilweise in einem gemeinsamen Axialbereich mit der Radialverzahnung angeordnet sein. Das Betätigungselement ist vorzugsweise an dem Bauteil, das die Radialverzahnung ausbildet, axial geführt. Das Betätigungselement kann insbesondere koaxial zur Drehachse des Eingangselements und des Ausgangselements angeordnet sein. Der eingangsseitig angebundene Teil des Eingangselements und der ausgangsseitige angebundene Teil des Ausgangselements können bei der Betätigung der Formschlusskupplung in axialer Richtung unbeweglich bleiben. Ein auszugleichender Axialversatz zu weiteren Komponenten des Antriebsstrangs kann dadurch vermieden werden.

Erfindungsgemäß , die Federeinrichtung weist einen mit dem Betätigungselement befestigten Befestigungsring und von dem Befestigungsring radial abstehende und an der jeweiligen Kugel angreifende Biegefedern auf. Die Biegefedern können insbesondere einstückig mit dem Befestigungsring ausgeführt sein, so dass die Befestigungseinrichtung aus einem einzigen einstückigen Bauteil besteht und die Bauteileanzahl geringgehalten ist. Die Biegefedern können als flaches Blech ausgestaltet sein, das im wesentlichen punktförmig an der sphärischen Kugel anliegen kann, um die Kugel mit einer minimierten Reibung in axialer Richtung vorzuspannen. Eine bereits geringfügige von dem der Biegefeder aufgeprägte Federkraft in axialer Richtung ist bereits ausreichend, um die axiale Relativlage der Kugeln zu vereinheitlichen. Zudem ist es möglich die Federeinrichtung kostengünstig durch Stanzen aus einem Blech herzustellen.

Vorzugsweise stehen die Kugeln über eine von der Axialverzahnung wegweisenden Axialseite des Betätigungselements teilweise über. Die Federeinrichtung kann flächig an der von der Axialverzahnung wegweisenden Axialseite des Betätigungselements anliegen, so dass der überstehende Teil der Kugeln automatisch einen radial abstehenden Teil der Federeinrichtung elastisch in axialer Richtung wegbiegen kann, wodurch die Vorspannkraft von der Federeinrichtung durch konstruktiv einfach und kostengünstig umzusetzende Maßnahmen auf die einzelnen Kugeln aufgeprägt werden kann.

Besonders bevorzugt ist eine, insbesondere als Tellerfeder ausgestaltete, Rückstellfeder zur Positionierung des Betätigungselements in einer, insbesondere der geschlossenen Stellung der Formschlusskupplung entsprechenden, Ausgangslage vorgesehen, wobei die Rückstellfeder über ein mit dem Betätigungselement befestigtes Abstandselement mittelbar an dem Betätigungselement angreift. Durch das Abstandselement kann sichergestellt werden, dass die Rückstellfeder nicht die Wirkungsweise der zur axialen Vorspannung der Kugeln vorgesehenen Federeinrichtung beeinträchtigt. Insbesondere ist ein Betätigungsaktor zur Verlagerung des Betätigungselements aus der Ausgangslage vorgesehen. Die als Tellerfeder ausgestaltet Rückstellfeder kann auf einem geringen Bauraum eine hohe Schließkraft zum Schließen der Formschlusskupplung bereitstellen. Die Formschlusskupplung kann "normally closed" ausgestaltet sein, so dass nur zum Abkoppeln der Brennkraftmaschine vom übrigen Antriebsstrang, beispielsweise in einem Segelbetrieb oder einen rein elektrischen Betrieb, der Betätigungsaktor von einer externen Energiequelle betätigt werden muss. Alternativ kann die Formschlusskupplung als "normally open" ausgestaltet sein, so dass bei einem technischen Defekt des Kupplungsaggregats ein Drehmomentfluss unterbrochen werden kann. Der Betätigungsaktor kann beispielsweise elektrisch, hydraulisch oder pneumatisch betätigt werden, um eine die Schließkraft der Rückstellfeder überwindende Öffnungskraft aufzubringen.

Insbesondere weist das Abstandselement einen mit dem Betätigungselement befestigten Verbindungsring und ein zumindest mit einem Anteil in axialer Richtung von dem Verbindungsring abstehendes, insbesondere rohrförmiges, Distanzstück auf, wobei die Rückstellfeder an dem von dem Betätigungselement wegweisenden Ende des Distanzstücks angreift. Ein Teil der Federeinrichtung kann sogar in einen gemeinsamen Axialbereich mit dem Distanzstück hineingebogen sein, ohne dass die Rückstellfeder und die Federeinrichtung sich gegenseitig stören.

Vorzugsweise sind die Federeinrichtung und das Abstandselement über mindestens ein gemeinsames Befestigungsmittel mit dem Betätigungselement verbunden. Die Bauteileanzahl kann dadurch geringgehalten werden. Das Befestigungsmittel kann insbesondere als Nietverbindung ausgestaltet sein.

Besonders bevorzugt ist die Kugel im geschlossenen Zustand der Formschlusskupplung zwischen zwei in Umfangsrichtung nachfolgenden Zähnen der Axialverzahnung spielfrei eingesetzt. Der Zahnzwischenraum zwischen zwei in Umfangsrichtung nachfolgenden Zähnen kann sich nach radial innen so weit verjüngen, dass die axiale Relativbewegung der Kugel erst dann endet, wenn die Kugel an den aufeinander zu weisenden Zahnflanken beider Zähne des betrachteten Zahnzwischenraums anliegt. Klappergeräusche bei Drehmomentschwankungen und ein unnötig erhöhter Verschleiß durch Lastwechsel können dadurch vermieden werden.

Insbesondere weist das Ausgangselement eine Außenverzahnung oder eine Innenverzahnung zur Ausbildung einer axial relativ bewegbaren Steckverzahnung mit einem im Drehmomentfluss nachfolgenden Drehmomentübertragungselement, insbesondere eine Zwischenwelle zur Anbindung eines Rotors einer elektrischen Maschine eines Hybrid-Antriebsstrangs, auf. Die Steckverzahnung erlaubt eine drehfeste aber axial verschiebbare Koppelung, so dass das Kupplungsaggregat als vormontierte Baueinheit leicht durch eine axiale Relativbewegung mit einer Getriebeeingangswelle oder Zwischenwelle montiert werden kann.

Vorzugsweise ist das Ausgangselement über ein, insbesondere als Wälzlager ausgestaltetes, Lager an dem Eingangselement gelagert und zentriert. Ein Verkippen des Ausgangselements relativ zum Eingangselement kann dadurch vermieden werden, so dass eine Beeinträchtigung des Formschlusses der Formschlusskupplung im geschlossenen Zustand vermieden ist. Gleichzeitig kann eine im Wesentlichen parallele Ausrichtung der Reibpaarungen der Reibungskupplung sichergestellt werden.

Die Erfindung betrifft ferner ein Kupplungsaggregat zur Koppelung einer Motorwelle einer Brennkraftmaschine mit einer Getriebeeingangswelle eines Kraftfahrzeuggetriebes und/oder mit einer Zwischenwelle eines Hybrid-Antriebsstrangs, mit einer mit der Motorwelle direkt oder indirekt gekoppelten Reibungskupplung zum reibschlüssigen Übertragen eines Drehmoments bis zu einem Grenzdrehmoment und einer parallel zur Reibungskupplung geschalteten Formschlusskupplung, die wie vorstehend beschrieben aus- und weitergebildet sein kann, zum formschlüssigen Übertragen eines oberhalb des Grenzdrehmoment liegenden Drehmoments. Durch die an allen Kugeln einzeln angreifende Federeinrichtung kann ein gleichmäßiges Tragen der Kugeln in der Schließstellung der Formschlusskupplung sichergestellt werden, so dass eine gute Übertragung hoher Drehmomente in einem Antriebsstrang ermöglicht ist. Da die Reibungskupplung nur eine Vorsynchronisation des Ausgangselements zum Eingangselement bewirken muss, kann die Reibungskupplung für ein deutlich geringeres Grenzdrehmoment ausgelegt sein. Die Reibungskupplung kann hierzu insbesondere als Plattenkupplung ausgestaltet sein, bei der mit Hilfe genau einer axial verlagerbaren Anpressplatte eine Kupplungsscheibe und/oder ein mit der Anpressplatte oder mit einer Gegenplatte verbundener Reibbelag zwischen der Anpressplatte und genau einer Gegenplatte reibschlüssig verpresst werden kann. Die Reibungskupplung muss nicht als Mehrscheibenkupplung oder Lamellenkupplung ausgestaltet sein, so dass die Herstellungskosten und der Bauraumbedarf gesenkt werden können. Gleichzeitig kann die Formschlusskupplung extrem hohe Drehmomente übertragen, wobei ein verschleißarmes und beschädigungsfreies Schließen der Formschlusskupplung mit Hilfe der zum Zwecke der Vorsynchronisation vorher betätigten Reibungskupplung sichergestellt werden kann. Durch die Vorsynchronisation der für niedrige Drehmomente ausgelegten Reibungskupplung kann ein unproblematisches Schließen der zur Übertragung sehr hoher Drehmomente geeigneten Formschlusskupplung erreicht werden, so dass bauraumsparend eine gute Übertragung hoher Drehmomente in einem Antriebsstrang ermöglicht ist.

Die Erfindung betrifft ferner einen Hybrid-Antriebsstrang für ein Hybrid-Kraftfahrzeug, mit einer eine Motorwelle aufweisenden Brennkraftmaschine zum Antrieb des Hybrid-Kraftfahrzeug, einer elektrischen Maschine zum Antrieb des Hybrid-Kraftfahrzeug, wobei die elektrische Maschine einen mit einem Stator zusammenwirkenden Rotor aufweist, einer mit dem Rotor gekoppelten Zwischenwelle und einem Kupplungsaggregat, das wie vorstehend beschrieben aus- und weitergebildet sein kann, zur Koppelung der Motorwelle mit der Zwischenwelle, wobei insbesondere dem Kupplungsaggregat im Drehmomentfluss im Zugbetrieb nachfolgend ein Drehschwingungsdämpfer zu Dämpfung von Drehungleichförmigkeiten im von der Brennkraftmaschine erzeugten Drehmoment vorgesehen ist. Durch die Vorsynchronisation der für niedrige Drehmomente ausgelegten Reibungskupplung kann ein unproblematisches Schließen der zur Übertragung sehr hoher Drehmomente geeigneten Formschlusskupplung erreicht werden, so dass bauraumsparend eine gute Übertragung hoher Drehmomente in einem Hybrid-Antriebsstrang ermöglicht ist. Da das Kupplungsaggregat besonders hohe Drehmomente übertragen kann, kann das Kupplungsaggregat auch durch Drehzahlschwankungen im von der Brennkraftmaschine erzeugten Drehmoment auftretenden Drehmomentspitzen gut übertragen, so dass das Kupplungsaggregat auch im Drehmomentfluss zwischen der Brennkraftmaschine und dem Drehschwingungsdämpfer vorgesehen sein kann.

Ein Aspekt der Erfindung betrifft ein Verfahren zum Koppeln einer Motorwelle einer Brennkraftmaschine mit einer Getriebeeingangswelle eines Kraftfahrzeuggetriebes und/oder mit einer Zwischenwelle eines Hybrid-Antriebsstrangs, bei dem ein Eingangselement zum Einleiten eines Drehmoments mit einem Ausgangselement zum Ausleiten des Drehmoments reibend synchronisiert wird, eine formschlüssig Koppelung des Eingangselements mit dem Ausgangselement während oder nach der Synchronisation herbeigeführt wird, wobei insbesondere die formschlüssige Koppelung bei einem oberhalb eines für die reibende Synchronisation vorgesehen maximalen Grenzdrehmoments anliegenden Drehmoments abgeschlossen wird. Vorzugsweise wird zur Koppelung der Motorwelle mit der Zwischenwelle ein Kupplungsaggregat, das wie vorstehend beschrieben aus- und weitergebildet sein kann, verwendet. Durch die an allen Kugeln einzeln angreifende Federeinrichtung kann ein gleichmäßiges Tragen der Kugeln in der Schließstellung der Formschlusskupplung sichergestellt werden, so dass eine gute Übertragung hoher Drehmomente in einem Antriebsstrang ermöglicht ist. Das Verfahren kann insbesondere wir vorstehend anhand des Kupplungsaggregats und/oder der Formschlusskupplung erläutert aus- und weitergebildet sein. Durch die reibschlüssige Vorsynchronisation kann ein unproblematisches Schließen der formschlüssigen Drehmomentübertragung erreicht werden, so dass bauraumsparend eine gute Übertragung hoher Drehmomente in einem Antriebsstrang ermöglicht ist.

Zunächst wird die reibschlüssige Synchronisation abgeschlossen, bevor die formschlüssige Koppelung begonnen und/oder abgeschlossen wird. Falls nach der reibschlüssigen Drehzahlsynchronisation die formschlüssig zusammenwirkenden Elemente für die formschlüssige Koppelung sich zufälligerweise in einer Relativwinkellage zueinander befinden sollten, in denen die Herstellung eines Formschlusses blockiert ist, kann der Formschluss nach der reibschlüssigen Drehzahlsynchronisation automatisch erfolgen, wenn ein maximales Grenzdrehmoment der reibschlüssigen Koppelung überschritten wird und wieder ein Schlupfbetrieb in der Reibungskupplung beginnt. Die Drehzahldifferenz im in diesen Fall eintretenden Schlupfbetrieb ist jedoch so gering, dass die Elemente für die formschlüssige Koppelung ohne Probleme in die formschlüssig geschlossene Schließstellung gelangen können, ohne dass unzulässig starke Tangentialkräfte zwischen den formschlüssig zusammenwirkenden Elementen auftreten.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer Formschlusskupplung im geöffneten Zustand,
- Fig. 2:: eine schematische Detailansicht der Formschlusskupplung aus Fig. 1 und
- Fig. 3:: eine schematische perspektivische Schnittansicht der nur teilweise dargestellten Formschlusskupplung aus Fig. 1.

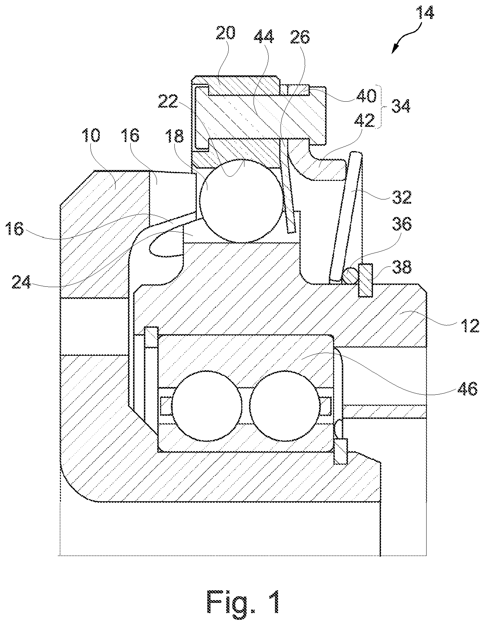

Ein insbesondere zum An- und/oder Abkoppeln einer Brennkraftmaschine an beziehungsweise von einem Hybrid-Antriebsstrang eines Hybrid-Kraftfahrzeugs vorgesehenes Kupplungsaggregat weist ein Eingangselement 10 zum Einleiten des in der Brennkraftmaschine erzeugten Drehmoments und ein Ausgangselement 12 zum Ausleiten des Drehmoments auf. Das Eingangselement 10 kann mit dem Ausgangselement 12 über eine nicht dargestellte Reibungskupplung reibschlüssig gekoppelt werden, wobei ein maximal übertragbares Grenzdrehmoment der Reibungskupplung deutlich unterhalb des maximal von dem Kupplungsaggregat zu übertragenen Maximaldrehmoments liegt. Um auch ein Drehmoment oberhalb des Grenzdrehmoments der Reibungskupplung übertragen zu können, ist zu der Reibungskupplung eine in Fig. 1 dargestellte Formschlusskupplung 14 parallelgeschaltet, um die Reibungskupplung in diesem Fall zu überbrücken.

Zur Ausbildung des Formschlusses der Formschlusskupplung 14 weist das Eingangselement 10 eine Axialverzahnung mit in axialer Richtung abstehenden Zähne 16 auf. In einen Zahnzwischenraum der Zähne 16 kann jeweils eine Kugel 18 eingefädelt werden. Hierzu weist das Ausgangelement 12 ein als axial verschiebbar geführten Außenring ausgestaltetes Betätigungselement 20 auf, das die Kugel 18 von der in Fig. 1 dargestellten geöffneten Stellung in eine formschlüssig mit den Zähnen 16 der Axialverzahnung gekoppelte Schließstellung axial verlagern kann. Das Betätigungselement 20 weist für die jeweiligen Kugeln 18 eine, insbesondere als in Umfangsrichtung verlaufende Rille ausgestaltete, Aufnahmevertiefung 22 auf, in denen die jeweilige Kugel 18 mit axialem Spiel teilweise eingesetzt ist. Das Ausgangselement 12 kann eine als Außenverzahnung 24 ausgestaltete Radialverzahnung aufweisen, an der die axial relativ beweglichen Kugeln 18 tangential anschlagen können. In der Schließstellung der Formschlusskupplung kann das zu übertragende Drehmoment über die tangential an den Kugeln 18 anschlagenden Zähnen 16 des Eingangselements 10 an die tangential an denselben Kugeln 18 anschlagende Außenverzahnung 24 des Ausgangselements 12 formschlüssig zwischen dem Eingangselement 10 und dem Ausgangselement 12 ausgetauscht werden.

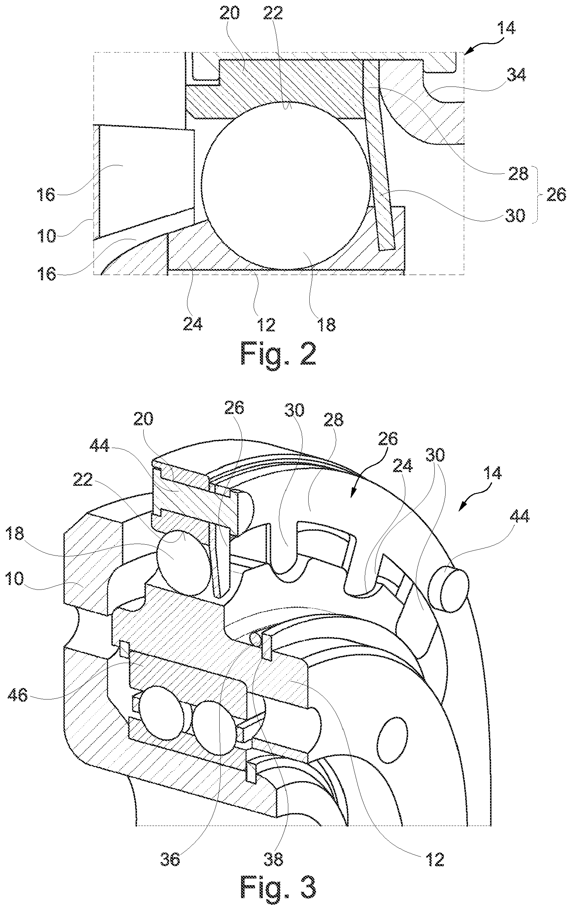

Mit dem Betätigungselement 20 ist eine Federeinrichtung 26 vernietet, die auf sämtlichen Kugeln 18 eine axiale Federkraft aufprägt und dadurch die Kugeln innerhalb der Aufnahmevertiefung 22 auf die Zähne 16 der Axialverzahnung zu leicht axial vorspannt. Dadurch können die in Umfangsrichtung hintereinander angeordneten Kugeln 18 trotz axialem Spiel und/oder geringen Toleranzanforderungen für die Aufnahmevertiefung 22 alle in einer im Wesentlichen identischen axialen Relativlage zum Betätigungselement 20 gehalten werden, wie in Fig. 2 dargestellt. Dadurch kann während der Schließbewegung des Betätigungselements 20 und in der Schließstellung der Formschlusskupplung 14 ein gleichmäßiges Tragen der Kugeln 18 erreicht werden.

Wie in Fig. 3 dargestellt, kann die Federeinrichtung 26 einen mit dem Betätigungselement 20 vernieteten Befestigungsring 28 aufweisen, von dem für jede Kugel 18 jeweils eine Biegefeder 30 nach radial innen absteht. Die Biegefeder 30 kann von einem über eine von den Zähnen 16 der Axialverzahnung wegweisenden Axialseite überstehenden Teil der Kugeln 18 elastisch weggebogen werden, wie in Fig. 2 dargestellt, wodurch die Biegefeder 30 die Federkraft für die axiale Vorspannung der Kugeln 18 aufprägen kann.

Wie insbesondere in Fig. 1 dargestellt, ist zur axialen Verlagerung des Betätigungselements 20 in die Schließstellung eine als Tellerfeder ausgestaltete Rückstellfeder 32 vorgesehen, die an ihrem äußeren Kraftrand über eine mit dem Betätigungselement 20 vernietetes Abstandselement 34 an dem Betätigungselement 20, insbesondere mit Federvorspannung, mittelbar angreift und an ihrem inneren Kraftrand, vorzugsweise über einen zur Lagerung der Rückstellfeder 32 vorgesehenen Drahtring 36, an dem Ausgangselement 12 axial abgestützt ist. Zur axialen Abstützung der Rückstellfeder 32 kann ein in dem Ausgangselement 12 eingesetzter Sicherungsring 38 vorgesehen sein. Zur Verlagerung des Betätigungselements 20 in die geöffnete Stellung der Formschlusskupplung 14 kann ein an dem Betätigungselement 20 axial angreifender nicht dargestellter Betätigungsaktor vorgesehen sein, der das Betätigungselement 20 gegen die Federkraft der Rückstellfeder 32 axial verlagern kann. Damit die Rückstellfeder 32 die Funktion der Federeinrichtung 26 nicht beeinträchtigt, weist das Abstandselement 34 einen mit dem Betätigungselement 20 vernieteten Verbindungsring 40 und ein einstückig von dem Verbindungsring 40 in axialer Richtung abstehendes, insbesondere im Wesentlichen rohrförmiges, Distanzstück 42 auf, an dessen freien axialen Ende die als Tellerfeder ausgestaltete Rückstellfeder 32 angreifen kann. Die Biegefedern 30 der Federeinrichtung 26 können hierbei in einen gemeinsamen Axialbereich mit dem Distanzstück 42 hinein abgebogen werden, ohne dass eine Störung mit der Rückstellfeder 32 auftritt. Zusätzlich oder alternativ kann die Rückstellfeder 32 und/oder der Drahtring 36 und/oder der Sicherungsring 38 zumindest teilweise in einem gemeinsamen Axialbereich mit dem Distanzstück 42 angeordnet sein, um axialen Bauraum zu sparen. Die Federeinrichtung 26 und das Abstandselement 34 können insbesondere über gemeinsame Befestigungsmittel 44 mit dem Betätigungselement 20 befestigt, insbesondere vernietet, sein.

Zudem kann das Ausgangselement 12 an dem Eingangselement 10 über ein als zweireihiges Rillenkugellager ausgestaltetes Lager 46 gelagert und im Wesentlichen kippfrei zentriert sein.

### Bezugszeichenliste

- 10: Eingangselement
- 12: Ausgangselement
- 14: Formschlusskupplung
- 16: Zahn
- 18: Kugel
- 20: Betätigungselement
- 22: Aufnahmevertiefung
- 24: Außenverzahnung
- 26: Federeinrichtung
- 28: Befestigungsring
- 30: Biegefeder
- 32: Rückstellfeder
- 34: Abstandselement
- 36: Drahtring
- 38: Sicherungsring
- 40: Verbindungsring
- 42: Distanzstück
- 44: Befestigungsmittel
- 46: Lager

## Patentansprüche

1. Formschlusskupplung zur wahlweisen formschlüssigen Drehmomentübertragung in einem Antriebsstrang eines Kraftfahrzeugs, mit
einem mit der Motorwelle direkt oder indirekt koppelbaren Eingangselement (10) zum Einleiten eines Drehmoments,
einem relativ zu dem Eingangselement (10) drehbaren Ausgangselement (12) zum Ausleiten des Drehmoments,
mehreren axial verlagerbaren Kugeln (18) zum formschlüssigen Koppeln des Ausgangselements (12) mit dem Eingangselement (10),
einem Betätigungselement (20) zum axialen Verlagern der Kugeln (18) zwischen einer in einer Axialverzahnung eingesetzten Schließstellung und einer zu der Axialverzahnung axial versetzten Öffnungsstellung, wobei die Kugeln zwischen der Schließstellung und der Öffnungsstellung in einer Radialverzahnung (24) eingesetzt sind,
wobei das Betätigungselement (20) eine, insbesondere als in Umfangsrichtung umlaufende Rille ausgestaltete, Aufnahmevertiefung (22) zur teilweisen Aufnahme der jeweiligen Kugel (18) aufweist, und
einer mit dem Betätigungselement (20) befestigten Federeinrichtung (26) zur axialen Vorspannung jeder Kugel (18) innerhalb der Aufnahmevertiefung (22) auf die Axialverzahnung zu, **dadurch gekennzeichnet, dass** die Federeinrichtung (26) einen mit dem Betätigungselement (20) befestigten Befestigungsring (28) und von dem Befestigungsring (28) radial abstehende und an der jeweiligen Kugel (18) angreifende Biegefedern (30) aufweist.

2. Formschlusskupplung nach Anspruch 1, **dadurch gekennzeichnet, dass** die Kugeln (18) über eine von der Axialverzahnung weg weisenden Axialseite des Betätigungselements (20) teilweise überstehen.

3. Formschlusskupplung nach Anspruch 1 oder 2, **dadurch gekennzeichnet, dass** eine, insbesondere als Tellerfeder ausgestaltete, Rückstellfeder (32) zur Positionierung des Betätigungselements (20) in einer, insbesondere der geschlossenen Stellung der Formschlusskupplung (14) entsprechenden, Ausgangslage vorgesehen ist, wobei die Rückstellfeder (32) über ein mit dem Betätigungselement (20) befestigtes Abstandselement (34) mittelbar an dem Betätigungselement (20) angreift.

4. Formschlusskupplung nach Anspruch 3, **dadurch gekennzeichnet, dass** das Abstandselement (34) einen mit dem Betätigungselement (20) befestigten Verbindungsring (40) und ein zumindest mit einem Anteil in axialer Richtung von dem Verbindungsring (40) abstehendes, insbesondere rohrförmiges, Distanzstück (42) aufweist, wobei die Rückstellfeder (32) an dem von dem Betätigungselement (20) wegweisenden Ende des Distanzstücks (42) angreift.

5. Formschlusskupplung nach Anspruch 3 oder 4, **dadurch gekennzeichnet, dass** die Federeinrichtung (26) und das Abstandselement (34) über mindestens ein gemeinsames Befestigungsmittel (44) mit dem Betätigungselement (20) verbunden sind.

6. Kupplungsaggregat zur Koppelung einer Motorwelle einer Brennkraftmaschine mit einer Getriebeeingangswelle eines Kraftfahrzeuggetriebes und/oder mit einer Zwischenwelle eines Hybrid-Antriebsstrangs, mit einer mit der Motorwelle direkt oder indirekt gekoppelten Reibungskupplung zum reibschlüssigen Übertragen eines Drehmoments bis zu einem Grenzdrehmoment und einer parallel zur Reibungskupplung geschalteten Formschlusskupplung (14) nach einem der Ansprüche 1 bis 5 zum formschlüssigen Übertragen eines oberhalb des Grenzdrehmoment liegenden Drehmoments.

7. Hybrid-Antriebsstrang für ein Hybrid-Kraftfahrzeug, mit einer eine Motorwelle aufweisenden Brennkraftmaschine zum Antrieb des Hybrid-Kraftfahrzeug, einer elektrischen Maschine zum Antrieb des Hybrid-Kraftfahrzeug, wobei die elektrische Maschine einen mit einem Stator zusammenwirkenden Rotor aufweist, einer mit dem Rotor gekoppelten Zwischenwelle und einem Kupplungsaggregat nach Anspruch 6 zur Koppelung der Motorwelle mit der Zwischenwelle, wobei insbesondere dem Kupplungsaggregat im Drehmomentfluss im Zugbetrieb nachfolgend ein Drehschwingungsdämpfer zu Dämpfung von Drehungleichförmigkeiten im von der Brennkraftmaschine erzeugten Drehmoment vorgesehen ist.

8. Verfahren zum Koppeln durch eine Formschlusskupplung nach einem der Ansprüche 1-5 einer Motorwelle einer Brennkraftmaschine mit einer Getriebeeingangswelle eines Kraftfahrzeuggetriebes und/oder mit einer Zwischenwelle eines Hybrid-Antriebsstrangs, bei dem ein Eingangselement (10) zum Einleiten eines Drehmoments mit einem Ausgangselement (12) zum Ausleiten des Drehmoments reibend synchronisiert wird, eine formschlüssige Koppelung des Eingangselements (10) mit dem Ausgangselement (12) während oder nach der Synchronisation herbeigeführt wird, wobei die formschlüssige Koppelung bei einem oberhalb eines für die reibende Synchronisation vorgesehen maximalen Grenzdrehmoments anliegenden Drehmoments abgeschlossen wird, **dadurch gekennzeichnet, dass** zunächst die reibschlüssige Synchronisation abgeschlossen wird, bevor die formschlüssige Koppelung begonnen und/oder abgeschlossen wird.

## Claims

1. A positive-engagement clutch for optional positive torque transmission to a powertrain of a motor vehicle, having
an input element (10), which can be directly or indirectly coupled to the motor shaft in order to introduce a torque,
an output element (12), which can be rotated relative to the input element (10) in order to output the torque,
multiple axially movable balls (18) for coupling the output element (12) to the input element (10) in positive engagement,
an actuation element (20) for axially moving the balls (18) between a closed position, in which they are inserted into an axial toothing, and an open position, in which they are axially offset relative to the axial toothing, wherein the balls are inserted into a radial toothing (24) between the closed position and the open position,
wherein the actuation element (20) has a receiving depression (22), in particular in the form of a circumferential groove, for partly receiving each ball (18), and
a spring device (26) which is secured to the actuation element (20) in order to axially bias each ball (18) within the receiving depression (22) onto the axial toothing, **characterised in that** the spring device (26) has a mounting ring (28) secured to the actuation element (20) and flexure springs (30) projecting radially from the mounting ring (28) and engaging the respective ball (18).

2. The positive-engagement clutch according to claim 1, **characterised in that** the balls (18) partially protrude beyond an axial side of the actuation element (20) pointing away from the axial toothing.

3. The positive-engagement clutch according to claim 1 or 2, **characterised in that** a restoring spring (32), in particular designed as a plate spring, is provided for positioning the actuation element (20) in an initial position corresponding in particular to the closed position of the positive-engagement clutch (14), wherein the restoring spring (32) acts indirectly on the actuation element (20) via a spacer element (34) fastened to the actuation element (20).

4. The positive-engagement clutch according to claim 3, **characterised in that** the spacer element (34) has a connecting ring (40) fastened to the actuation element (20) and a, in particular tubular, spacer piece (42), which protrudes at least partially in the axial direction from the connecting ring (40), wherein the restoring spring (32) acts on the end of the spacer (42) pointing away from the actuation element (20).

5. The positive-engagement clutch according to claim 3 or 4, **characterised in that** the spring device (26) and the spacer element (34) are connected to the actuation element (20) via at least one common fastening means (44).

6. A clutch assembly for coupling an engine shaft of an internal combustion engine to a transmission input shaft of a motor vehicle transmission and/or to an intermediate shaft of a hybrid powertrain, having a friction clutch directly or indirectly coupled to the engine shaft for frictionally engaged transmission of torque up to a limit torque and a positive-engagement clutch connected in parallel to the friction clutch (14) according to any one of claims 1 to 5 for the positive transmission of a torque above the limit torque.

7. A hybrid powertrain for a hybrid motor vehicle, having an internal combustion engine having a motor shaft for driving the hybrid motor vehicle, an electric machine for driving the hybrid motor vehicle, wherein the electric machine has a rotor interacting with a stator, an intermediate shaft coupled to the rotor and a clutch assembly according to claim 6 for coupling the motor shaft to the intermediate shaft, wherein in particular a torsional vibration damper is provided downstream of the clutch assembly in the torque flow in traction mode for damping torsional irregularities in the torque generated by the internal combustion engine.

8. A method for coupling an engine shaft of an internal combustion engine to a transmission input shaft of a motor vehicle transmission and/or to an intermediate shaft of a hybrid powertrain using a positive-engagement clutch according to any one of claims 1 to 5, in which an input element (10) for introducing a torque is frictionally synchronised with an output element (12) for extracting the torque, a coupling of the input element (10) with the output element (12) in positive engagement is brought about during or after the synchronisation, wherein the coupling in positive engagement is terminated at a torque present above a maximum limit torque provided for the frictional synchronisation, **characterised in that** the frictional synchronisation is first completed before the coupling in positive engagement is started and/or completed.

## Revendications

1. Accouplement positif pour une transmission de couple par complémentarité de forme sélective dans un groupe motopropulseur d'un véhicule automobile, comprenant
un élément d'entrée (10) pouvant être accouplé directement ou indirectement à l'arbre moteur pour introduire un couple,
un élément de sortie (12) pouvant tourner par rapport à l'élément d'entrée (10) pour dissiper le couple,
plusieurs billes (18) déplaçables axialement pour le couplage par complémentarité de forme de l'élément de sortie (12) à l'élément d'entrée (10),
un élément d'actionnement (20) pour déplacer axialement les billes (18) entre une position fermée insérée dans une denture axiale et une position ouverte décalée axialement par rapport à la denture axiale, les billes étant insérées entre la position fermée et la position ouverte dans une denture radiale (24),
dans lequel l'élément d'actionnement (20) présente un évidement de réception (22), notamment réalisé sous la forme d'une rainure périphérique, pour recevoir en partie la bille respective (18) et
un dispositif à ressort (26) fixé avec l'élément d'actionnement (20) pour la précontrainte axiale de chaque bille (18) à l'intérieur de l'évidement de réception (22) sur la denture axiale, **caractérisé en ce que** le dispositif à ressort (26) comporte une bague de fixation (28) fixée avec l'élément d'actionnement (20) et des ressorts flexibles (30) qui dépassent radialement de la bague de fixation (28) et agissent sur la bille respective (18).

2. Accouplement positif selon la revendication 1, **caractérisé en ce que** les billes (18) dépassent partiellement d'un côté axial de l'élément d'actionnement (20) tourné à l'opposé de la denture axiale.

3. Accouplement positif selon la revendication 1 ou 2, **caractérisé en ce qu'**un ressort de rappel (32), notamment réalisé sous la forme d'un ressort à lames, sert à positionner l'élément d'actionnement (20) dans une position initiale correspondant notamment à la position fermée de l'accouplement positif (14), le ressort de rappel (32) agissant indirectement sur l'élément d'actionnement (20) par l'intermédiaire d'un élément d'écartement (34) fixé avec l'élément d'actionnement (20).

4. Accouplement positif selon la revendication 3, **caractérisé en ce que** l'élément d'écartement (34) comporte une bague de liaison (40) fixée avec l'élément d'actionnement (20) et une entretoise (42), notamment tubulaire, qui dépasse au moins partiellement dans la direction axiale depuis la bague de liaison (40), dans lequel le ressort de rappel (32) agit sur l'extrémité de l'entretoise (42) tournée à l'opposé de l'élément d'actionnement (20).

5. Accouplement positif selon la revendication 3 ou 4, **caractérisé en ce que** le dispositif à ressort (26) et l'élément d'écartement (34) sont reliés à l'élément d'actionnement (20) par le biais d'au moins un moyen de fixation commun (44).

6. Groupe d'accouplement pour accoupler un arbre moteur d'un moteur à combustion interne à un arbre d'entrée de transmission d'une transmission de véhicule automobile et/ou à un arbre intermédiaire d'un groupe motopropulseur hybride, comprenant un embrayage à friction accouplé directement ou indirectement à l'arbre moteur pour une transmission de couple par friction jusqu'à un couple limite et un accouplement positif (14) selon l'une quelconque des revendications 1 à 5 monté en parallèle à l'embrayage à friction pour la transmission par complémentarité de forme d'un couple supérieur au couple limite.

7. Groupe motopropulseur hybride pour véhicule automobile hybride, comprenant un moteur à combustion interne comportant un arbre moteur pour entraîner le véhicule automobile hybride, un moteur électrique pour entraîner le véhicule automobile hybride, le moteur électrique comportant un rotor coopérant avec un stator, un arbre intermédiaire accouplé au rotor et un groupe d'accouplement selon la revendication 6 pour accoupler l'arbre moteur à l'arbre intermédiaire, dans lequel en particulier un amortisseur de vibrations de torsion est disposé en aval du groupe d'accouplement dans le flux de couple en mode de traction pour amortir les irrégularités de torsion dans le couple généré par le moteur à combustion interne.

8. Procédé d'accouplement d'un arbre moteur d'un moteur à combustion interne à un arbre d'entrée de transmission d'une transmission de véhicule automobile et/ou à un arbre intermédiaire d'un groupe motopropulseur hybride au moyen d'un accouplement positif selon l'une quelconque des revendications 1 à 5, dans lequel un élément d'entrée (10) destiné à introduire un couple est synchronisé par friction avec un élément de sortie (12) destiné à dissiper le couple, un accouplement par complémentarité de forme de l'élément d'entrée (10) à l'élément de sortie (12) est réalisé pendant ou après la synchronisation, dans lequel l'accouplement par complémentarité de forme est achevé lorsque le couple appliqué est supérieur à un couple limite maximum prévu pour la synchronisation par friction, **caractérisé en ce que** la synchronisation par friction est d'abord achevée avant que l'accouplement par complémentarité de forme ne soit démarré et/ou achevé.
